# EUROPEAN PATENT APPLICATION

(11) **EP 0 881 082 A2**
(43) Date of publication of application: **02.12.1998**
(21) Application number: 98302014.0
(22) Date of filing: 18.03.1998
(51) Int. Cl.: B41J 2/505, B41J 2/525

(54) **Apparatus and method for forming an image with reduced printhead signature**

(30) Priority: 29.05.1997 US 865274
(71) Applicant: Xerox Corporation, Rochester, New York 14644 (US)
(72) Inventor: Ellson, Richard N., Palo Alto, CA 94306 (US)
(74) Representative: Walker, Antony James Alexander

(57) **Abstract**

A multi-drop per spot printing system delivers ink drops from different droplet ejectors to reduce printhead signature. By dividing the ink density of ink pixels or spots between different sources so that more than one discrete drop of ink is required to fill a given pixel on the recording media, the probability of generating artifacts created by droplet ejector misdirectionality and variations in drop size are minimized. In operation, the multiple drop per spot printing system provides a first and a second set of droplet ejectors that is defined using a single printhead or a plurality of printheads. A first quantity of ink required for a preselected pixel location on a recording media is deposited by a droplet ejector using the first set of ejectors. Subsequently, a second quantity of ink required for the preselected pixel location on the recording media is deposited by a droplet ejector using the second set of ejectors.

## Description

Cross-reference is made U.S. Patent Application Serial No. 08/781,365, entitled "Checkerboard Printing For Multiple Drop Per Pixel Ink Jet Printing", to David Mantell, assigned to Xerox Corporation, and herein incorporated by reference.

The present invention relates generally to a method for forming an image on a recording medium with a multi-drop per spot printer, and more particularly, to a method for hiding printhead signature by forming pixels of images on a recording medium with different droplet ejectors.

A substantial amount of effort has been devoted to eliminating the "signature" of a printhead that is used to produce a print with a drop on demand printing system. The appearance of a printhead's signature depends on the particular type of printing technology used to produce the print. For example, in the case of drop on demand printing technologies such as thermal ink jet (TIJ), piezo-electric, and acoustic ink printing (AIP), the signature in an images formed using these technologies typically results from directionality characteristics of the printhead, variations in drop size, and the motion control systems which move the printhead relative to a receiving media. These irregularities, which are different for each printhead, generate different and undesirable artifacts that define a unique "signature" on each print produced by a particular printhead.

Much of the "signature" of a printhead in the case of a drop on demand device may arise from differences in the behavior of droplet ejectors which eject ink drops. Not all droplet ejectors eject droplets in exactly the same manner because of inconsistencies created during fabrication or subsequent alterations such as the collection of dirt in an aperture of a droplet ejector. In other words, drops ejected by an array of droplet ejectors are not always propelled toward a receiving medium at the same angle or at the same velocity. On average, most droplet ejectors tend to fire drops so that they reach the center of a spot. This means that not all drops that are intended to reach the very center of a spot will do so. Thus, some droplets may stray from the center of a spot to some degree thereby causing perceivable printhead signature.

Another source of printhead signature arises when ink drops ejected from printhead ejectors vary in size. This source of printhead signature occurs when some of the ejectors on a printhead consistently eject drops which are smaller or larger than a desired uniform quantity of ink. The desired uniform quantity of ink generally defines the resolution or spot size of a printhead on a recording medium. Fluctuations from the uniform quantity of ink between droplets delivered to a recording medium can lead to the formation of artifacts if the difference in quantity of ink delivered to the recording medium are significant enough to become visible. These effects of varying drop size become more pronounced for equivalent variations in ink quantity as the desired drop size becomes smaller.

Different methods have been developed for hiding the signature of a single drop per spot printhead. Single drop per spot printheads adequately cover a pixel on a recording medium with a single drop of ink. These different methods for hiding printhead signature tend to mask the signature of a single drop per spot printhead by depositing a plurality of ink drops at different locations in a region of a recording medium with ink from different droplet ejectors. Thus, any given region of the printed media may have ink from different ejector sources. This technique is commonly referred to as "checkerboard" printing because the fundamental pattern used to apply ink drops to a recording medium is similar to the spatial patterns for colored squares on a standard chessboard. U.S. Patent No. 4,999,646 to Trask for example is directed to improving the uniformity and consistency of dot formation during color ink jet printing. Specifically, Trask discloses sequentially printing complementary checkerboard patterns with a partial printhead advance between the complementary patterns to reduce image defects from weak and misdirected jets.

It is also known in the art that the accuracy with which drops of ink can be positioned on a recording medium affects the quality of drop on demand printing systems. With high resolution single drop per spot printing the accuracy of the placement of drops of ink on a recording medium plays a major role in the quality of the output image. If drops are misdirected when deposited on the paper, the quality gained from increased resolution printing can be lost. The quality of an image printed with a drop on demand printing system depends in part on the resolution (i.e., pixel density) at which a printer is capable of printing. In a multi-drop per spot printer, the size of an ink spot is smaller than the resolution at which the printer is printing. This enables a spot or pixel of ink to be formed with multiple ink drops. It would be advantageous, therefore, to provide a method for operating a multi-drop per spot printhead that reduces printhead signature without significant productivity loss in printing.

It is an object of the invention to provide a multi-drop per spot printer and method of operation that minimizes printhead signature caused by printhead ejector misdirectionality or drop volume error. In one embodiment of the invention, the multi-drop per spot printer is an acoustic ink printer.

It is another object of the invention to provide a method, and apparatus therefor, for printing an image on a recording medium with a multi-drop per spot printer having a plurality of droplet ejectors. According to a first aspect of the present invention there is provided a method for printing an image on a recording medium with a multi-drop per spot printer having a plurality of droplet ejectors, comprising the steps of:
defining a first and second set of droplet ejectors from the plurality of droplet ejectors, with each set of droplet ejectors having at least one ejector;
determining a total amount of marking material required for a preselected pixel location on the recording medium;
dividing the total amount of marking material required for the preselected pixel location into a first and a second quantity of marking material; and
depositing the total amount of marking material in the preselected pixel location on the recording medium by ejecting the first quantity of marking material from at least one droplet ejector in the first set of droplet ejectors and ejecting the second quantity of marking material from at least one ejector in the second set of droplet ejectors.

According to a second aspect of the present invention there is provided a printer for printing an image on a recording medium with a multi-drop per spot printer, comprising:
a first and a second set of droplet ejectors, with each set of droplet ejectors having at least one droplet ejector;
an image processing unit for determining a total amount of marking material required for a preselected pixel location on the recording medium, said image processing unit dividing the total amount of marking material required for the preselected pixel location into a first and a second quantity of marking material; and
a controller coupled to said first and said second set of droplet ejectors and said image processing unit; said controller receiving the first and second quantity of marking material required for the preselected pixel location from said image processing unit and directing said first and said second set of droplet ejectors to deposit the total amount of marking material in the preselected pixel location on the recording medium by ejecting the first quantity of marking material from at least one ejector in said first set of droplet ejectors and ejecting the second quantity of marking material from at least one ejector in said second set of droplet ejectors.

According to a third aspect of the invention, there is provided a method for printing an image on a recording medium with a multi-drop per spot printer having N droplet ejectors. The image is defined by an array of pixel values that require from zero to Z drops of ink, where Z is an integer that defines a maximum number of drops each of the N droplet ejectors can deliver to a spot on the recording medium. The method includes the steps of: dividing the required number of drops of ink for each pixel value of the image into a first and a second set of ink drops; dividing the N droplet ejectors of the printer into a first set of M droplet ejectors and a second set of N-M droplet ejectors; positioning the recording medium relative to the N droplet ejectors to receive the first set of ink drops from the first set of M droplet ejectors; depositing the first set of ink drops to pixel locations on the recording medium with the droplet ejectors from the first set of M droplet ejectors; repositioning the recording medium relative to the N droplet ejectors to receive the second set of ink drops from the second set of N-M droplet ejectors; and depositing the second set of ink drops to pixel locations on the recording medium with the droplet ejectors from the second set of N-M droplet ejectors.

These and other aspects of the invention will become apparent from the following description read in conjunction with the accompanying drawings wherein the same reference numerals have been applied to like parts and in which:
Figure 1 illustrates a simplified schematic block diagram of a system in which the present invention may be applied;
Figure 2 illustrates a partial-width acoustic ink printhead for performing the present invention;
Figure 3 illustrates two page-width acoustic ink printheads for performing the present invention;
Figure 4 illustrates a bottom-up schematic depiction of an array of apertures or orifices of the printhead taken along view lines 4-4 in Figure 2;
Figure 5 illustrates a perspective view of a portion of an acoustic ink printhead for carrying out the present invention taken along view lines 5-5 in Figure 4;
Figure 6 illustrates the locations of ink drops deposited by a single drop per spot printhead in a 1 by 1 pattern;
Figure 7 illustrates a manner of forming a pixel on a recording medium with the multi-drop per spot printhead;
Figure 8 illustrates the location of ink drops deposited by the printhead illustrated in Figure 4;
Figure 9 illustrates a histogram of droplet ejector misdirectionality of a printhead such as the printhead shown in Figure 2;
Figure 10 illustrates an occurrence where two droplet ejectors that are adjacent to each other have a misdirectionality problem in opposite directions;
Figures 11-13 illustrate an example of operating the multi-drop per spot printhead shown in Figure 2 in accordance with the present invention;
Figures 14-16 illustrate the manner of droplet application and the spreading effects that occur after the application of the drops to the recording medium as specified in Figures 11-13, respectively;
Figure 17 is a flow diagram of a method for depositing drops of ink with a multi-drop per spot printer; and
Figure 18 illustrates a bottom-up schematic depiction of the printheads shown in Figure 3 along view lines 118-118.

### A. Multi-Drop Printing System

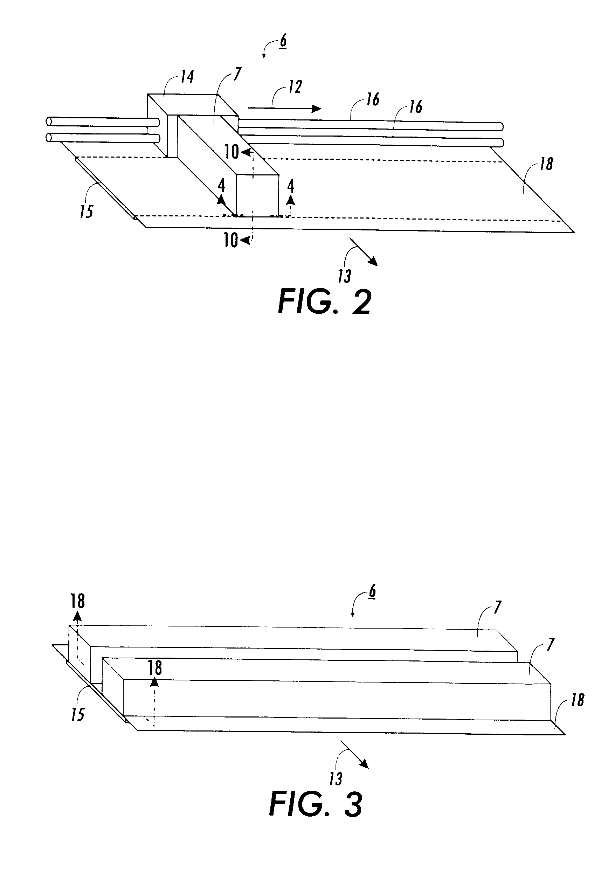

Referring now to the drawings where the showings are for the purpose of describing the invention and not for limiting same, the Figures illustrate a multi-drop per spot (monochrome) printer 6 and its method for carrying out the present invention. In the illustrated embodiments, the multi-drop per spot printer 6, which applies multiple drops of ink to form a spot or pixel, utilizes an acoustic ink printhead 7 shown in Figures 2-4. Acoustic ink printing is well known in the art and described for example in U.S. Patent Nos. 4,751,530, 5,041,849, 5,028,937, 5,589,864, and 5,565,113 which are hereby incorporated by reference.

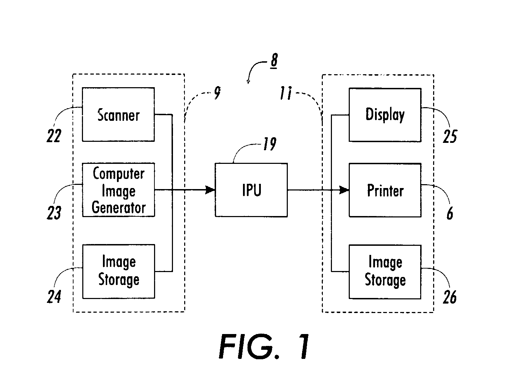

Figure 1 illustrates a simplified schematic block diagram of a system 8 which includes the multi-drop per spot printer 6. In the system 8, an electronic representation of a document or image from an image input terminal (IIT) 9 derives electronic digital data in some manner from an original image or other source, in a format related to the physical characteristics of the device typically including pixels. Typical image input terminals include a scanner 22, a computer image generator 23, such as a personal computer, and an image storage device 24. The electronic digital data signals, transmitted through an image processing unit 19 are processed for suitable reproduction on an image output terminal (IOT) 11 which can include an image storage device 26, a multi-drop per spot printer 6, or a display 25. The multi-drop per spot printer 6 can comprise a variety of different types of printers which include but are not limited to continuous stream printers, drop on demand printers, thermal ink jet printers, piezoelectric printers, and acoustic printers. In addition, different kinds of inks can be used to form multiple drops per spot such as liquid inks, phase change wax inks, or aqueous inks. Furthermore, such printers are not limited to ejecting inks onto a recording medium but can in instead eject drops using any number of different marking materials which include inks, toners or plastics, or more generally any polymer that is conductive or insulating.

Since printer 6 is a multi-drop per spot printer, the printer can print images readily with multiple gray levels, the specifics of which are described below. Generally, image data received as bitmaps or in a high level image format, such as a page description language, is rendered by the image processing unit 19 to a format suitable for printing on printer 6. The output of rendered image data from image processing unit 19 is a printfile composed of an array of pixel values where each pixel value defines a quantity of ink for a pixel on a page of a printed document. Each pixel value in the array of pixel values ranges from zero to "Z", where "Z" is the maximum number of drops the printer 6 generates per single spot. Thus, the printfile generated by the image processing unit 19 specifies from zero to "Z" drops for each pixel value of an image where Z corresponds to the gray level specified by the number of drops for that pixel.

Figure 2 illustrates one embodiment of a partial-width array printhead 7 that is coupled to a controller 14. The controller 14 which slides on rails 16 includes a first drive means for moving the printhead 7 in the fast scan direction 12 relative to a recording medium 18 (e.g., paper). While moving in the fast scan direction, the printhead 7 ejects droplets of ink towards the recording medium 18. After completing a pass in the fast scan direction 12 in which the recording medium 18 is held stationary, the controller 14 directs a second drive means 15 to advance the recording medium 18 in a slow scan direction 13. In accordance with the invention, the recording medium 18 advances a fraction of the length of the printhead 7 along the slow scan direction 13 after completing a pass in the fast scan direction 12. It will be appreciated by those skilled in the art that in an alternate embodiment (not shown), the recording medium 18 is advanced in the fast scan direction relative to the printhead 7 which is moved in the slow scan direction.

Figure 3 illustrates an alternate embodiment in which two full-width array printheads 7 remain stationary while the recording medium 18 moves relative to the printheads in slow scan direction 13. This alternate embodiment, which is discussed in more detail below, provides multi-drop per spot printing in accordance with the invention. Unlike the embodiment shown in Figure 2, the embodiment shown in Figure 3 does not require that the recording medium 18 be advanced a fraction of the length of one of the printheads 7. Although only one printhead 7 is shown in Figure 2, it will be understood by those skilled in the art that an additional printhead or printheads can be used in conjunction with the printhead shown in Figure 2 for performing the present invention and such use would not depart from the spirit and scope of the present invention. For example, the embodiment shown in Figure 2 could include a second printhead (not shown) which follows the printhead 7 in the fast scan direction.

Furthermore, since the printheads in Figures 2 and 3 from part of two different monochrome printers, each embodiment shown in Figures 2 and 3 can only apply a single color of ink to the recording medium 18. However, it will be understood by those skilled in the art that the embodiments shown in Figures 2 and 3 can be readily extended to print color images with two or more colors. For example, the embodiment shown in Figure 2 can be modified to print an additional color by adding one partial-width array printhead 7, whereas modifications to print an additional color in the embodiment shown in Figure 3 would require two additional full-width array printheads 7.

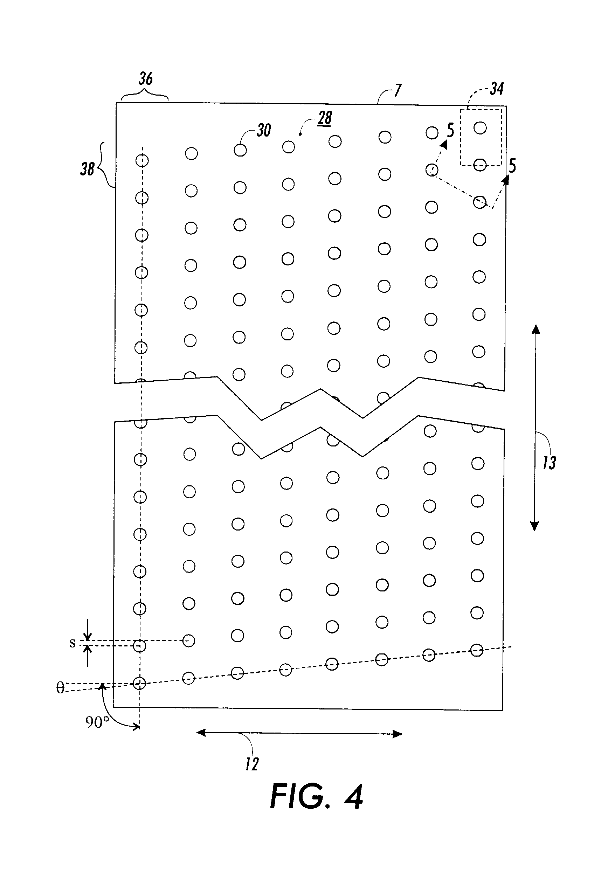

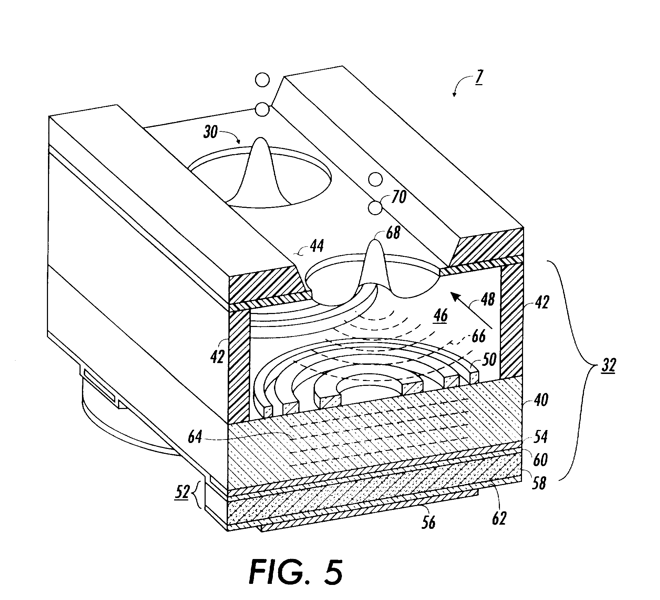

Figures 4 and 5 illustrate the acoustic ink printhead 7 shown in Figures 2 and 3 in more detail. Figure 4 illustrates a bottom-up schematic depiction of an array 28 of apertures or orifices 30 defined by printhead 7 taken along view lines 4-4 in Figure 2. Figure 5 illustrates a perspective view of a droplet ejector 32 of the printhead 7 taken along dotted box 34 and depicted from view line 5-5 in Figure 4. Since each droplet ejector 32 is capable of ejecting a droplet with a smaller radius than the droplet ejector itself, and since full coverage of the recording medium is desired, the individual apertures 30 are arranged in offset columns 36 as shown in Figure 4. Specifically, eight columns of droplet ejectors are offset at an angle θ to define slightly angled rows 38 of apertures 30. In one embodiment the printhead 7 has 128 rows of apertures 30. The angled offset of the rows 38 ensures that the center of adjacent pairs of apertures 30 extending along the slow scan direction 13 are evenly spaced a distance "s" therebetween.

Referring now to Figure 5, each droplet ejector 32 of the printhead 7 is formed on a glass substrate 40. Sidewalls 42 are formed on top of the glass substrate 40 between a liquid level control plate 44 to form a channel 46. Fluid, such as ink, is pumped through the channel 46 by a pressure means (not shown) in the direction of arrow 48. A Fresnel lens 50 is formed on the glass substrate 40 between the sidewalls 42 opposite from an aperture 30 in the control plate 44. A piezoelectric transducer 52 is positioned on the opposite side of the glass substrate 40 from the ink channel 46. The piezoelectric device includes a column electrode 54, a row electrode 56 and a piezoelectric layer 58. The piezoelectric layer 58, which is in one embodiment a thin film of ZnO, is sandwiched between a top interface layer 60 and a bottom interface layer 62 of SiN.

During normal operation, ink flows through the channel 46. When a radio frequency (RF) signal from an RF source (not shown), is applied between the electrodes 54 and 56, the piezoelectric layer 58 generates acoustic energy in the glass substrate 40 (i.e. wavefronts 64) that is directed towards the channel 46. The Fresnel lens 50 focuses the acoustic energy entering the ink channel 46 from the substrate 40. The focused acoustic energy (i.e. wavefronts 66) initially forms an ink mound 68 at a free surface of ink in the aperture 30. The ink mound 40 eventually becomes an ink drop 70 which is ejected towards a recording medium 18 (shown in Figures 2 and 3).

### B. Single-Drop Printing

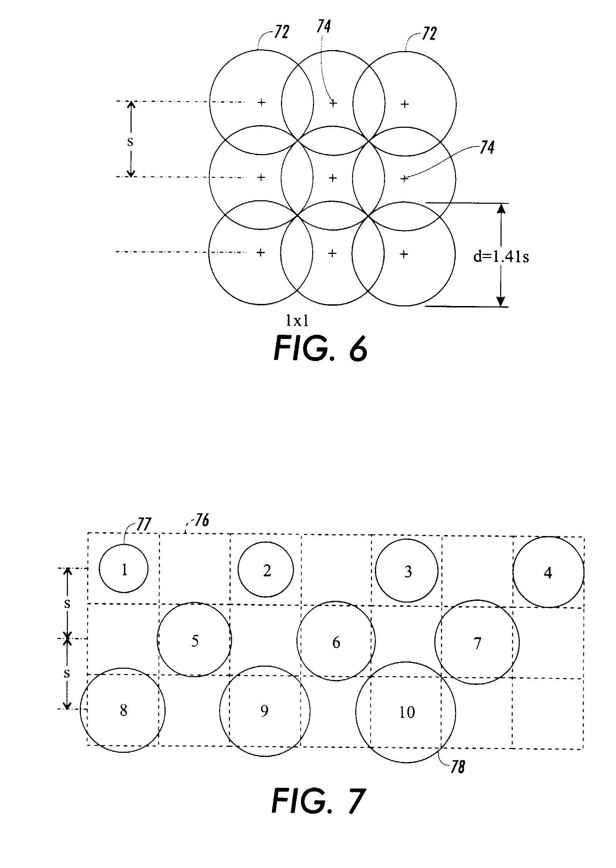

To facilitate the description of multi-drop per spot printing, single drop per spot printing is illustrated in Figure 6. Specifically, Figure 6 illustrates the locations of ink drops deposited by a single-drop per-spot printhead in a 1x1 pattern as known in the art. In such a printhead, for instance printing at 300 spots per inch, the pixels are placed on a square grid having a period of "s" where "s" is generally the spacing between the channels or orifices of the printhead. Ink spots 72 are deposited using a single-drop per-spot printhead on a grid defining a plurality of pixel areas at a predetermined resolution. The ink spots 72 deposited in the pixel areas have pixel centers 74 spaced a distance "s" apart. The ink nozzles or orifices of a single drop per-spot printhead are designed to produce spot diameters of at least 1.414 (the square root of 2) times the grid spacing "s", which is here illustrated as the distance "d". This distance provides complete filling of the pixel space by enabling diagonally adjacent pixels to touch. Consequently, in 1x1 printing (e.g., 300 x 300), the spots need to be at least 1.41"s" in diameter to cover the paper. In practice however, the ink spots or pixels are typically made slightly larger to ensure full coverage of the paper.

### C. Multi-Drop Printing

Multi-drop per pixel (or spot) printing with liquid ink, in contrast, deposits a number of small ink drops within a pixel space where each drop has a different drop center but which are clustered near the center of the pixel space. These drops are deposited in rapid succession within the pixel space such that ink of each drop merges together and spreads into a larger single spot. Most inks will spread more in the direction perpendicular to the printhead motion since the drops are already spread out in the direction of motion. Hence, the resulting spot on the receiving media may be slightly elliptical in shape with the long axis along the direction of motion. Only inks that effectively do not spread at all (very slow dry inks) or inks which finish spreading faster than the drops can be deposited (extremely fast dry ink) would be excluded. Thus, the multiple drops will tend toward the size and shape of a single drop having the same amount of ink, only slightly elongated in the printhead motion direction. Consequently, multi-drop per spot printers provide gray scale resolution within a single pixel where single drop per spot printers do not.

Figure 7 illustrates a manner of forming a pixel on a recording medium with the multi-drop per spot printhead. The circles in Figure 7 illustrate the progression of the relative size of a spot as it grows on a recording medium as an increasingly greater number of drops of ink are applied to the same spot. Specifically, each number at the center of the different circles indicates how many ink drops have been added to form the size of the drop. The dotted grid 76 is divided into squares of equal size to illustrate the relative size increase as a series of ten drops are added to form a series of spots of different sizes. That is, the circle 77 represents an ink spot when it is filled with one drop of ink, while the circle 78 represents the ink spot after it has been filled with ten drops of ink. Note that the spot 78 with ten drops has reached the comparable size of the ink spot 72 shown in Figure 6 produced by a single-drop per spot printhead. It will be understood by those skilled in the art that the relative spot sizes and shapes shown in Figure 7 is illustrative and will vary depending on many characteristic of the printing materials and environment including the particular receiving media, ink, thermal environment, and printhead used to generate each spot of ink.

The ink spot (or pixel) 78 shown in Figure 7 is formed on a recording medium by rapidly ejecting ten drops of ink from one or more droplet ejectors 32 of the printhead 7 (shown in Figure 5) as it moves across the recording medium 18. To accomplish this, the droplet ejectors 32 of the printhead 7 deposit ink drops in less time than it takes to move the printhead a single pixel spacing. The ten individual ink drops, which arrive at the recording medium close in both space and time to each other, are pulled by surface tension to coalesce into a single pool of liquid to form a spot or pixel of ink. In contrast with single drop per spot printing of same spatial resolution, multi-drop per spot printing reduces the drop volume and increases the firing frequency or drop ejection rates such that the spacing between adjacent drops is reduced to a fraction of the width of a pixel. The adjacent drops have a large amount of overlap, typically one-third or more, which causes the ink to spread in the directions perpendicular to the axis of overlap.

In determining the amount of ink necessary to be deposited for multi-drop per spot printing, it is important to determine how much optical density and receiving media coverage -- and therefore ink volume -- is necessary to provide the same amount of ink coverage as a single drop per spot printer. It has been found that it takes approximately the same amount of ink or less to cover the page by printing successive small drops as for single drop per spot printing. Thus, as long as the drop size can be decreased and the firing frequency increased, multi-drop per spot printing becomes a viable method for improving image quality when the number of gray levels achievable within a pixel can be raised and the quality improvement can be achieved without reducing the productivity of the printer. Smaller drop volumes also provide the additional benefit of faster refill time or recovery time for drop ejectors. The smaller drops also require less energy per drop thereby enabling more drop ejectors to be energized simultaneously.

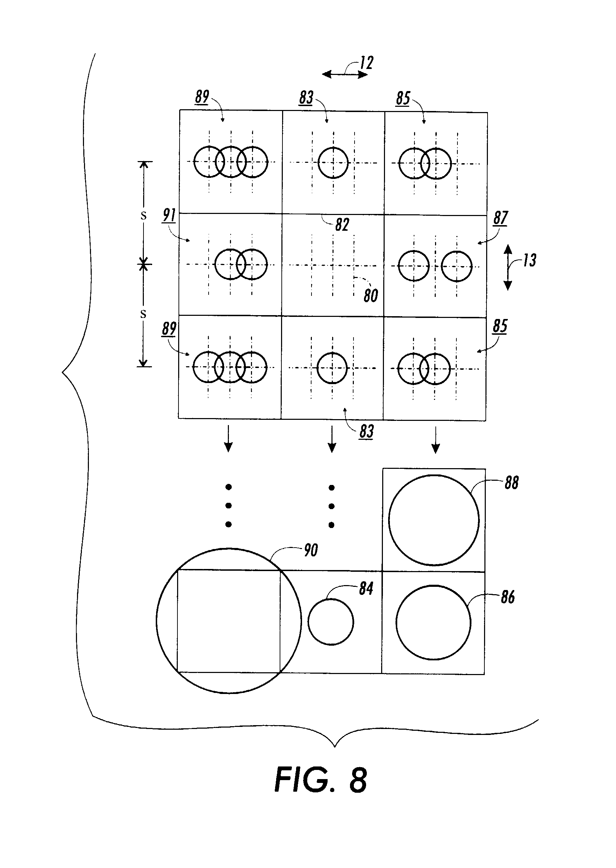

Figure 8 illustrates the location of ink drops deposited by the printhead 7 illustrated in Figure 4. Using the printhead 7, multi-drop per spot printing is accomplished by printing on a high addressability grid 80 within a pixel location 82. In Figure 8, multi-drop per spot printing is illustrated for the case of three drops per spot. This is accomplished by reducing the drop volume by approximately a factor of three and increasing the firing frequency by more than a factor of three. Each pixel location 82 is composed of a grouping of drops on the high addressability grid 80. In this example up to five gray levels may be formed because each grouping of drops on the high addressability grid 80 can range from zero to three.

Drops are not required to be deposited on top of one another to achieve a relatively circular drop size because the rate at which two drops coalesce together through surface tension is much greater than the rate at which ink is absorbed by the recording medium. Thus, drops that land near each other quickly spread and coalesce into a single drop through surface tension before the ink from the drops evaporate or are absorbed by the recording medium. For instance, the subpixel groupings 83 having one ink drop deposited therein is illustrated as an actual ink drop 84 having a size slightly larger than the initially deposited drop due to drop spreading. Also, the subpixel groupings 85 and 91 are shown having two ink drops deposited along the fast scan direction 12 such that the ink drop 80 formed thereby has a size 86 that is greater than the ink drop 84. Since the ink has spread in the slow scan direction 13 more so than in the fast scan direction 12, the resulting drop 86 may have a fairly circular appearance. Though the two groupings 85 and 91 result in the same spot size 86, additional image quality benefits are derived when taking into account neighboring pixels 82. Such image quality benefits include smoothing edges and controlling the gray scale. Furthermore, the subpixel grouping 87, which includes two ink drops separated by an empty subpixel location, results in an ink spot 88 having a size larger than either the drop 86. Lastly, subpixel grouping 89 includes three ink drops generating an ink spot 90.

In addition, it has also been found for a given drop volume and spacing that as the number of drops within a high addressability grid increases, the shape of the group of overlapping ink drops includes an oblong characteristic and may not be perfectly round as shown in the Figures. While the illustration shows the spacing between drop centers being regularly spaced, in reality the drops centers may be irregularly spaced due to inherent fluctuations in drop positioning.

### D. Droplet Ejector Misdirectionality

As set forth above, droplet ejectors of a printhead have misdirectionality problems because they may not always propel droplets towards a recording medium at the same angle. Droplet ejector misdirectionality can be caused, for example, by inconsistencies in the printhead created during fabrication. In addition, droplet ejector misdirectionality may develop while using a printhead because of dirt collecting in the apertures of printhead's droplet ejectors. Consequently, some drops may not reach their intended location on a recording medium. These droplet firing inconsistencies define the signature of a printhead.

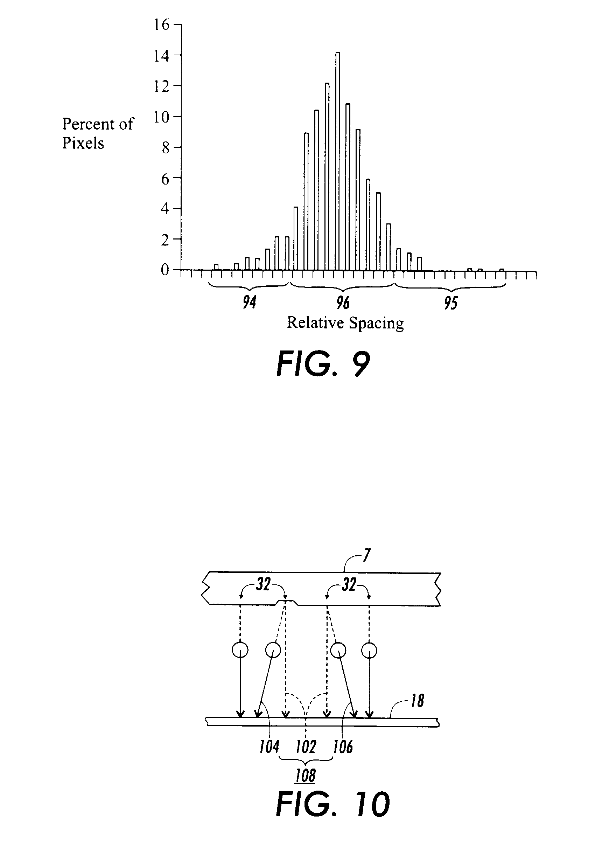

Figure 9 illustrates a histogram of droplet ejector misdirectionality of a printhead such as printhead 7 shown in Figure 2. The graph in Figure 9 illustrates what percentage of droplet ejectors for some population of ejectors (depicted on the vertical axis) deliver a drop within a predefined distance (depicted along the horizontal axis) from another pixel center. In other words, the histogram plots the relative spacing between drops delivered by a population of droplet ejectors. More specifically, the set of pixels in the distribution, indicated by reference number 96, are positioned approximately equally between two pixels. Also, the distribution in Figure 9 shows a small percentage of pixels, which are indicated by reference numbers 94 and 95, that were delivered onto a recording medium with some measurable misdirectionality as compared with the pixels indicated by reference number 96. The distribution of pixels with misdirectionality characteristics fired by a printhead define a unique pattern of artifacts on a recording medium. This unique pattern of artifacts is a major component of a printhead's signature. Additional printhead signature is caused when droplet ejectors malfunction and do not fire droplets at all, ejectors eject under-sized or over-sized drops, or drops are emitted at slow speeds. Artifacts created by droplet ejectors that do not fire create white lines in a print where a row of pixels is missing.

In effect, the histogram in Figure 9 illustrates that not all droplet ejectors of a printhead achieve the same level of accuracy when ejecting ink drops. Droplet ejector inaccuracy can result from, for example, inconsistencies caused by fabrication defects or power fluctuations. Also, droplet ejector inaccuracy that are unique to acoustic ink printing can be caused by tilt or deformation of the surface of the ink at the orifices 30 shown in Figure 5. For these and other reasons, droplet ejectors do not always propel a droplet towards a receiving medium at the same angle. This means that not all drops that are intended to reach a predetermined position on the high addressability grid 80 shown in Figure 8 will do so. This corresponds with the distribution in Figure 9 that indicates that a minority of droplet ejectors will fire drops so that they reach a destination that is outside an acceptable level of accuracy.

The most noticeable printhead signature arises from the widening of space between two droplets that are printed from droplet ejectors which address adjacent pixels. Figure 10 illustrates an occurrence where two droplet ejectors which address adjacent pixels have a misdirectionality problem in opposite directions. That is, these droplet ejectors have misdirectionality as depicted by reference numbers 94 and 95 shown in Figure 9. Specifically, Figure 10 illustrates a portion of a cross-section of the printhead 7 and the recording medium 18 along the view line 10-10 shown in Figure 2. If the droplet ejectors 32 were properly functioning, a droplet fired from the ejectors would travel along a path indicated by dotted arrows 102 towards the recording medium 18. Instead, one of the ejectors 32 is misdirected in one direction and the other ejector 32 is misdirected in the opposite direction, as indicated by arrows 104 and 106 respectively. As a result of the combined misdirectionality of two ejectors that address adjacent pixels, a space is created between these two pixels, as indicated by reference number 108. If large enough, this space would be similar to a space created by a non-ejecting ejector.

### E. Multi-Drop Printing With Different Droplet Ejector Sources

In accordance with the invention, ink delivered to any one pixel region, such as pixel region 82 shown in Figure 8, is delivered from more than one droplet ejector 32 of the printhead 7. By filling a pixel with drops of ink from two different pixel sources or droplet ejectors 32, the probability that certain artifacts such as the spacing shown in Figure 10 are created is reduced. In addition, this spacing artifact reduction eliminates or minimizes the appearance of printhead signature on a recording medium. For example, assume a random distribution of 1% of the pairs of neighboring droplet ejectors 32 of the printhead 7 create the artifact depicted in Figure 10 at any one time. By filling a pixel with ink drops from two different sources, instead of one, the artifact would only be visible if both sources fall in the same space widening category. Thus, by using more than one source of ink drops, the probability is greater that at least some of the drops of the ink drops that form an ink spot are delivered from a source with misdirectionality insufficient to produce a visible artifact. This reduces the net probability of seeing the artifact from approximately 1 in 100 line pairs to 1 in 10,000 line pairs, thereby lowering the overall incidence of widening white space between neighboring pixels.

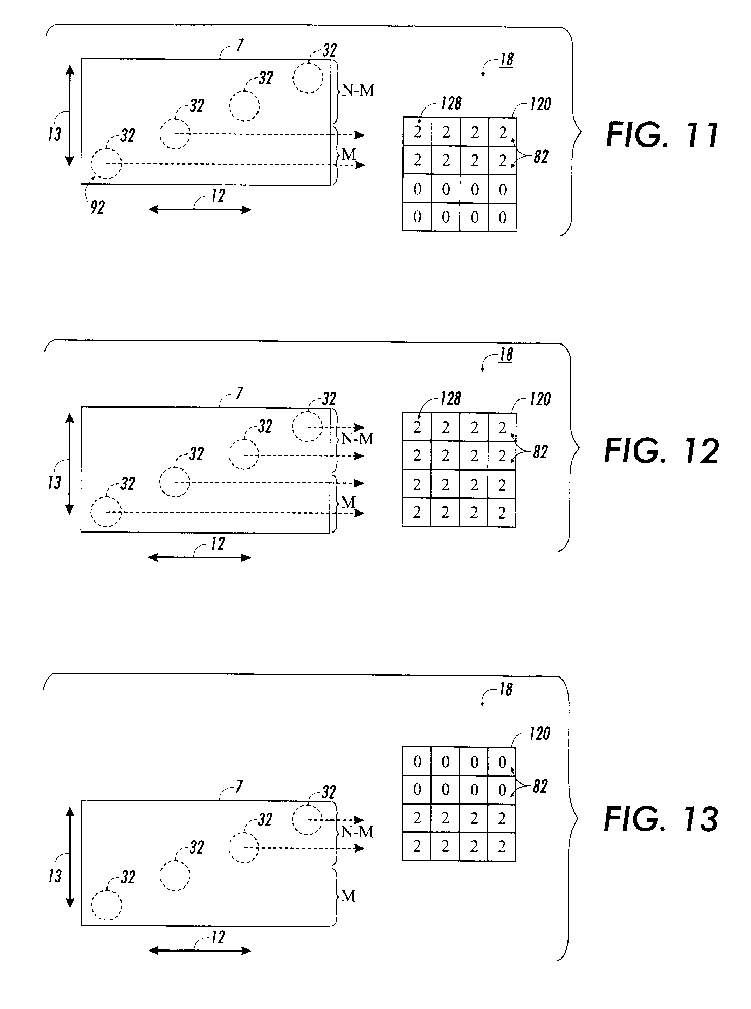

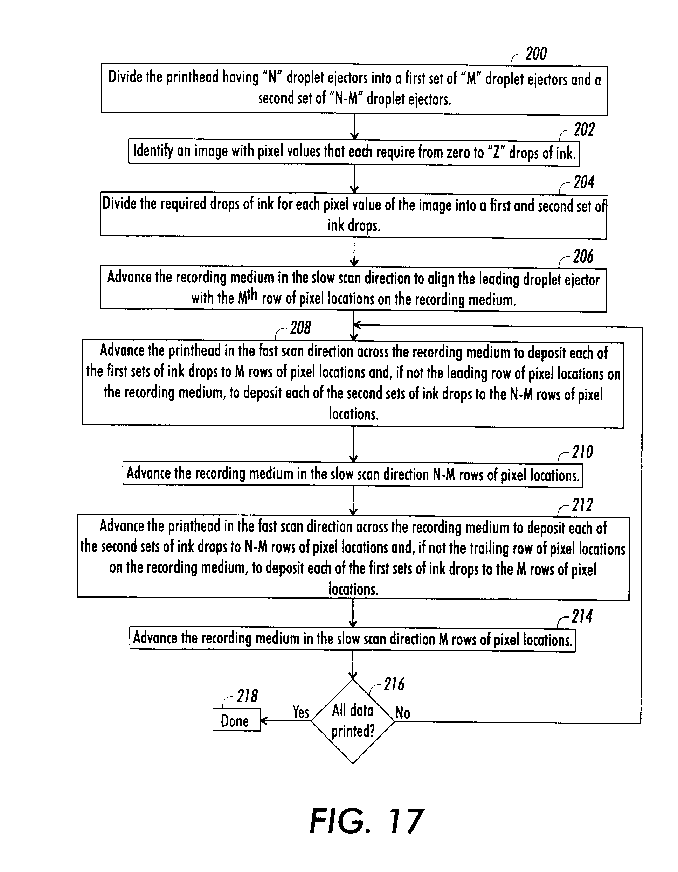

Figures 11-17 illustrate a method of operating the printhead 7 in accordance with the present invention. Figure 17 is a flow diagram that sets forth the steps for operating the printhead 7 in a manner that minimizes the probability of the appearance of printhead signature. In addition, Figures 11-16 illustrate an example of a printhead performing the steps outlined in Figure 17. Initially, the Figures 11-16 are described briefly before discussing the steps for operating the printhead set forth in Figure 17.

Figures 11-13 illustrates an example of operating the multi-drop per spot printhead 7 shown in Figure 2 in accordance with the steps set forth in Figure 17. In this illustrative example, the printhead 7 has four droplet ejectors 32 which are indicated generally by dotted circles. Figures 11-13 illustrates a top-down view of the printhead 7 shown in Figure 2 that is moving in the fast scan direction 12 over a recording medium 18. The recording medium 18 is conceptually overlaid with a grid of pixel locations 120. The grid of pixel location is not necessarily drawn to scale, but rather is enlarged for clarity. Inside each pixel location 82 in the grid 120 is a number that indicates how many droplets are applied to each pixel location 82 during a pass over the recording medium 18. In this example, each pixel location achieves full coverage with four droplets - half from one droplet ejector of the printhead 7 and half from another droplet ejector of printhead 7.

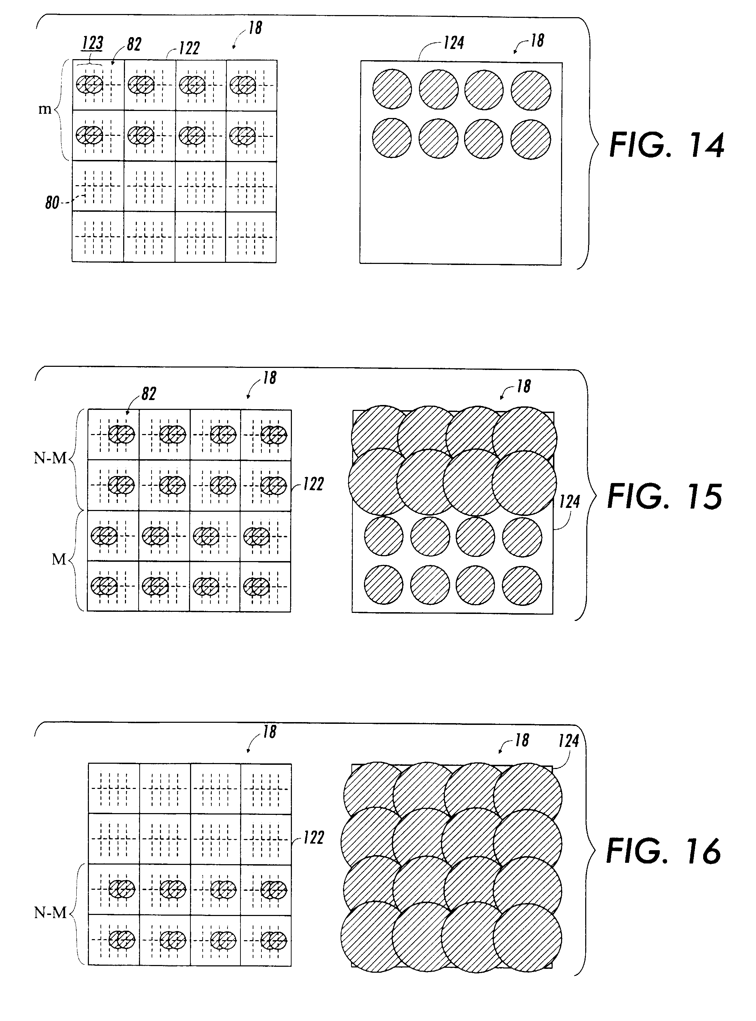

Figures 14-16 illustrate the manner of droplet application and the spreading effects that occur after applying ink drops to the recording medium 18 as specified in Figures 11-13, respectively. Each of the Figures 14-16 illustrate two different aspects of applying drops to the recording medium 18. The first aspect is illustrated by overlaying a first grid 122 on recording medium 18 to illustrate the application of individual drops that form subpixel groupings 123 in selected pixel locations 82. More specifically, the grid 122 includes four positions in high addressability grids 80 within each pixel location 82. Each subpixel grouping 123 in this example comprises two drops of ink that are deposited in either the first two locations or the last two locations of the high addressability grid 80. The second grid 124 illustrates what happens to the subpixel groupings 123 after the passage of time and ink spreading occurs.

Figure 17 is a flow diagram of a method for depositing drops of ink with a multi-drop per spot printer. Referring now to Figure 17 together with Figures 11-16, initially at step 200, the printhead 7, which includes a set of "N" droplet ejectors 32, is divided into a first set of "M" droplet ejectors and a second set of "N-M" droplet ejectors (where M is greater than zero but less than N). For example, the printhead 7 with N=4 droplet ejectors shown in Figures 11-13 is divided into a first set of two (i.e., M) droplet ejectors and a second set of two (i.e., N-M) droplet ejectors. The droplet ejectors 32 of the printhead 7 can be divided into the two sets of droplet ejectors M and N-M using any suitable controller such as controller 14 shown in Figure 2. In addition, it will be understood by those skilled in the art that the present invention need not be limited to dividing the droplet ejectors of a printhead into two sets of droplet ejectors, but instead can be divided into any number of sets of ejectors. For example, the ejectors of printhead 7 can be divided into a first, a second, and a third set of ejectors.

At step 202, the image processing unit 19 receives a print request that identifies an image to be printed. The identified image specifies pixels values, with each pixel value requiring from zero to "Z" drops of ink. Subsequently at step 204, the specified number of drops for each pixel value is divided into a first and a second set of ink drops by the image processing unit 19. For example, the grid 120 overlaid on the recording medium 18 in Figures 11 and 12 indicate that pixel location 128 requires a total of four drops. In this example, the number of drops for the pixel location 128 is divided into two sets with two drops per set. However, it will be understood by those skilled in the art that the number of drops for the pixel location 128 could be divided into two sets with one drop in one set and three drops in another set. Accordingly, the present invention does not require that the drops defining a spot of ink be divided evenly between two droplet ejectors, only that a spot of ink is defined using drops of ink from at least two different droplet ejectors.

At step 206, recording medium 18, shown in Figure 2, is advanced in the slow scan direction 13 (by the second drive means 15 shown in Figure 2) until the leading droplet ejector is aligned with the Mth row of pixel locations. In an alternate embodiment not shown, the printhead 7 is advanced relative to the recording medium 18 in the slow scan direction 13. Referring now to the example shown in Figure 11, the recording medium 18, at step 206, is advanced so that the leading droplet ejector is aligned with the second (i.e., M=2) row of pixel locations 93.

At step 208, the printhead 7 is advanced in the fast scan direction 12 (by the first drive means that forms part of controller 14 shown in Figure 2) across a recording medium. While advancing the printhead 7, each of the first sets of "M" ink drops are deposited in M rows of pixel locations. As shown in Figure 14, for example, the M rows of pixel locations have deposited on high addressability grid 80 two drops of ink at each pixel location 82. In addition, at step 208, if the leading row of pixel locations on the recording medium is not being imaged by printhead 7, then the second set of "N-M" ink drops are deposited in the N-M rows of pixel locations as shown for example in Figure 16.

At step 210, the recording medium 18 is advanced (by the second drive means 15 shown in Figure 2) in the slow scan direction 13 N-M rows of pixel locations. In the example shown in Figure 12, the printhead 7 is advanced two rows of pixel locations in the slow scan direction 13. At step 212, the printhead 7 is advanced in the fast scan direction 12 (by the first drive means that forms part of controller 14 shown in Figure 2) across the recording medium 18. While advancing the printhead in the fast scan direction, each of the second sets of "N-M" ink drops are deposited on N-M rows of pixel locations as shown, for example, in Figure 15. In addition, at step 212, if the printhead is not printing the trailing rows of pixel locations on the recording medium (as shown in the example in Figure 12), the first set of "M" ink drops are deposited on the "M" rows of pixel locations. However, if the printhead is printing the trailing rows of pixel locations on the recording medium (as shown in the example in Figure 13), only the second set of "N-M" ink drops are deposited on the N-M rows of pixel locations.

At step 214, the recording medium is advanced in the slow scan direction 13 (by the second drive means 15 shown in Figure 2) by a total of M rows of pixel locations. A determination is made at step 216 whether all of the image data has been printed on the recording medium 18. If all the image data has been printed, step 208 is repeated; otherwise, step 218 is executed which indicates that the print request has completed.

### F. Alternate Embodiments

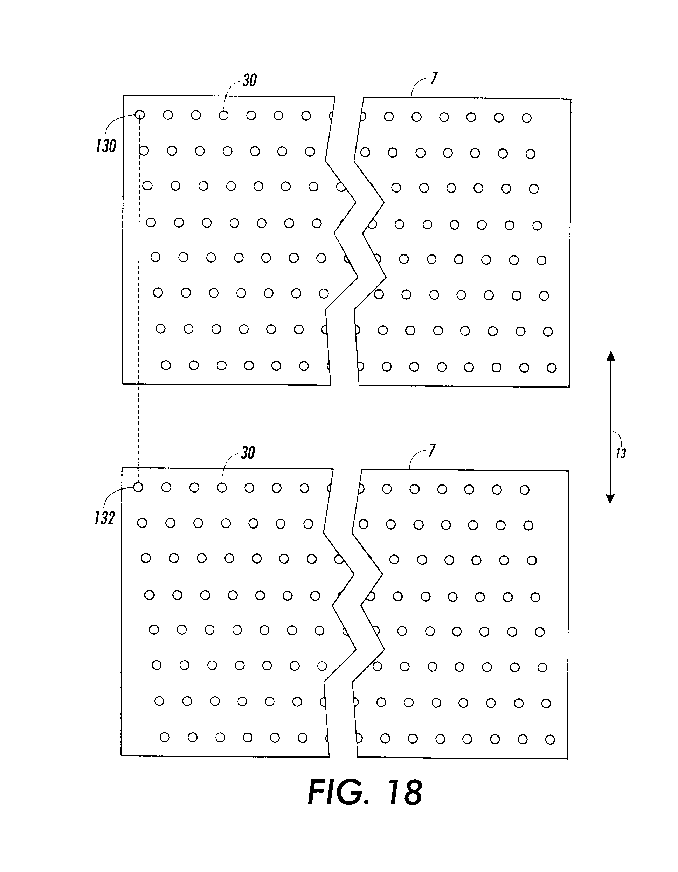

In a first alternate embodiment shown in Figure 3, the printheads 7 span the width of the recording medium 18. In accordance with the invention, drops are ejected from two different droplet ejector sources. Figure 18 illustrates a bottom-up schematic depiction of the printheads 7 shown in Figure 3 along view lines 118-118. As shown in Figure 18, printheads 7 are aligned so that two droplet ejectors, such as ejectors 130 and 132, are positioned along the same axis in the scan direction 13. In operation, as the recording medium 13 moves in the slow scan direction, a first set of droplet ejectors defined by a first printhead fill a preselected pixel location on the recording medium. Subsequently, a second set of droplet ejectors defined by the second printhead fills the preselected pixel location on the recording medium. Thus, instead of delivering drops from two different droplet ejectors on a single printhead as shown in Figure 2, this alternate embodiment delivers drops to a pixel from two different droplet ejectors with each ejector being located on different printheads.

In a second alternate embodiment, droplets are delivered so that power delivery distribution is smoothed across a printhead. In this second alternate embodiment, the first and second sets of droplet ejectors selected at step 204 in Figure 17 are divided so that even drops are always delivered by one of the two sets of "M" and "N-M" droplet ejectors and the odd drops are delivered by the other of the two sets "M" and "N-M" droplet. For example, for a pixel which should receive four drops in an eight-drop per spot printer, this embodiment would deliver the first and third drops from the first set of M droplet ejectors and the second and fourth drops from the second set of N-M droplet ejectors as opposed to printing all four drops from the first set. In the case of an odd number of drops being required per spot, this embodiment could be further refined to have a smoother power distribution in the printhead by distributing the ejectors responsible for printing the extra odd drops between the two sets of droplet ejectors. This refined alternate embodiment avoids the situation where "M" rows of pixel locations and "N-M" rows of pixel locations both deliver the odd number of drops in a single swath across the scan direction and deliver the even number of drops in another swath across the scan direction.

### G. Conclusion

In summary, the present invention minimizes the probability of generating artifacts created by droplet ejector misdirectionality or variations in ejector drop volume by delivering drops from more than one droplet ejector source, thereby minimizing printhead signature. As set forth above, the different sources of droplet ejectors can reside on one or more multi-drop per spot printheads. In addition, it will be understood by those skilled in the art, that while the present invention has been described for a printer with a fixed number of drops per spot, the present invention can be effective with any printhead that is capable of delivering more than one drop per spot. In addition, the present invention could be extended to a plurality of printheads where at least two of the printheads contain different colors of ink. In this case, a first and second set of ejectors would be formed for at least one ink color, and this first and second set would consist of ejectors which eject the same color of ink.

Unlike single drop per spot printing systems which use known checkerboarding techniques to deliver a drop from one droplet source to a pixel and another drop from another droplet source to the neighboring pixels, the present invention delivers ink to the same pixel using multiple droplet sources. Generally, localization of drop delivery (i.e. how close together two separate ejectors can apply ink on a recording medium) in single drop per spot printing systems is not significantly closer than the distance between two adjacent pixel locations. The present invention, however, advantageously reduces the localization of drop delivery by minimizing the delivery of ink to a fraction of a pixel location. In other words, the present invention reduces the localization of drop delivery to the same pixel by filling a pixel with at least two drops from different droplet sources. Although more than two droplet sources can be used to perform the present invention, most of the improvement in hiding printhead signature is realized using only two droplet sources.

In addition, these known checkerboard techniques that interleave single drop spots on a recording medium have the net effect of diluting white space to alternating pixels. Thus, these checkerboard techniques may reduce the visual impact of printhead's signature, but they do not minimize the creation of artifacts caused by ejector misdirectionality or variations in drop size. This invention, on the other hand, will not only mask a printhead's signature from misdirectionality but it will minimize the probability of generating artifacts created for example by ejector misdirectionality.

The invention has been described with reference to a particular embodiment. Modifications and alterations will occur to others upon reading and understanding this specification taken together with the drawings. The embodiments are but examples, and various alternatives, modifications, variations or improvements may be made by those skilled in the art from this teaching which are intended to be encompassed by the following claims.

## Claims

1. A method for printing an image on a recording medium with a multi-drop per spot printer having a plurality of droplet ejectors, comprising the steps of:
defining a first and a second set of droplet ejectors from the plurality of droplet ejectors, with each set of droplet ejectors having at least one ejector;
determining a total amount of marking material required for a preselected pixel location on the recording medium;
dividing the total amount of marking material required for the preselected pixel location into a first and a second quantity of marking material; and
depositing the total amount of marking material in the preselected pixel location on the recording medium by ejecting the first quantity of marking material from at least one droplet ejector in the first set of droplet ejectors and ejecting the second quantity of marking material from at least one ejector in the second set of droplet ejectors.

2. The method according to claim 1, wherein said defining step defines more than two sets of droplet ejectors from the plurality of droplet ejectors.

3. The method according to claim 2, further comprising the steps of:
defining a third and a fourth set of droplet ejectors from the plurality of droplet ejectors; and
dividing the total amount of marking material required for the preselected pixel location into a third and a fourth quantity of marking material;
wherein said dividing step divides the first and the second quantity of marking material between marking material having a first color and the third and the fourth quantity of marking material between marking material having a second color.

4. The method according to claims 1, 2 or 3, wherein said dividing step divides the total amount of marking material required for the preselected pixel location into two equal quantities of marking material.

5. The method according to any preceding claim, wherein the first set of droplet ejectors includes a droplet ejector on a first printhead and the second set of droplet ejectors includes a droplet ejector on a second printhead.

6. The method according to any of claims 2, 3 or 4, wherein said depositing step further comprises the steps of:
depositing the first quantity of marking material to the selected pixel location on the recording medium with a first droplet ejector from the first set of droplet ejectors while one of a printhead and the recording medium moves in a fast scan direction relative to the other of the printhead and the recording medium;
repositioning one of the printhead and the recording medium in a slow scan direction, which is perpendicular to the fast scan direction, relative to the other of the printhead and the recording medium after depositing the first quantity of marking material; and
depositing the second quantity of marking material to the selected pixel location on the recording medium with a second droplet ejector from the second set of droplet ejectors while one of the printhead and the recording medium moves in a fast scan direction relative to the other of the printhead and the recording medium.

7. The method according to claim 6, wherein said repositioning step repositions the printhead relative to the selected pixel location a number of pixel locations equal to the number of rows of droplet ejectors in the first set of droplet ejectors of the printhead and further comprising the step of repeating said repositioning step after depositing the second quantity of marking material.

8. A printer for printing an image on a recording medium (18) with a multi-drop per spot printer (6), comprising:
a first and a second set of droplet ejectors (32), with each set of droplet ejectors having at least one droplet ejector;
an image processing unit (19) for determining a total amount of marking material required for a preselected pixel location on the recording medium (18), said image processing unit (19) dividing the total amount of marking material required for the preselected pixel location into a first and a second quantity of marking material; and
a controller (14) coupled to said first and said second set of droplet ejectors (32) and said image processing unit (19); said controller (14) receiving the first and second quantity of marking material required for the preselected pixel location from said image processing unit (19) and directing said first and said second set of droplet ejectors (32) to deposit the total amount of marking material in the preselected pixel location on the recording medium (18) by ejecting the first quantity of marking material from at least one ejector in said first set of droplet ejectors and ejecting the second quantity of marking material from at least one ejector in said second set of droplet ejectors.

9. The printer according to claim 8, wherein said first and said second set of ejectors form part of a printhead (7).

10. The printer according to claims 8 or 9, further comprising:
means for advancing the printhead (7) across the recording medium (18) in a fast scan direction (12), which is perpendicular to a slow scan direction (13); and
means for advancing the recording medium in the slow scan direction (13) after the printhead (7) traverses the recording medium (18) in the fast scan direction (12).

11. The printer according to claims 9 or 10, wherein said printhead (7) is an acoustic marking material printhead.

12. The printer according to any of claims 9, 10 or 11, wherein said first set of ejectors forms part of a first printhead and said second set of ejectors forms part of a second printhead.

13. The printer according to any of claims 9, 10, 11 or 12, wherein said image processing unit (19) further divides the total amount of marking material required for the preselected pixel location into a third and a fourth quantity of marking material to divide the first and the second quantity of marking material between marking material having first color and the third and the fourth quantity of marking material between marking material having second color.
